# FASCICULE DE BREVET EUROPEEN

(11) **EP 3 831 719 B1**
(45) Date de publication et mention de la délivrance du brevet: **16.02.2022**
(21) Numéro de dépôt: 20210751.2
(22) Date de dépôt: 30.11.2020
(51) Int. Cl.: B64D 29/02, F02K 1/34

(54) **CARÉNAGE ARRIÈRE DE MÂT DE MOTEUR D'AÉRONEF À BOUCLIER THERMIQUE MULTICOUCHE**
RÜCKWÄRTIGE VERKLEIDUNG EINER MOTORSÄULE EINES LUFTFAHRZEUGS MIT MEHRSCHICHTIGEM WÄRMESCHUTZSCHILD
REAR FAIRING FOR AN AIRCRAFT ENGINE STRUT WITH A MULTI-LAYER HEAT SHIELD

(30) Priorité: 03.12.2019 FR 1913646
(43) Date de publication de la demande: 09.06.2021
(73) Titulaire: AIRBUS OPERATIONS (S.A.S.), 31060 Toulouse (FR)
(72) Inventeur: BROCHARD, Wolfgang, 31060 TOULOUSE Cedex 9 (FR); MERCAT, Florent, 31060 TOULOUSE Cedex 9 (FR); BLANC, Jonathan, 31060 TOULOUSE Cedex 9 (FR)
(74) Mandataire: Sarraméa, Claude

(56) Documents cités:
- EP-A1- 3 219 600
- EP-A2- 2 583 900
- FR-A1- 3 059 300
- FR-A1- 3 063 068
- US-A1- 2016 368 616

## Description

La présente invention se rapporte au domaine des mâts d'accrochage de moteur d'aéronef (encore appelés pylônes), ci-après dénommés plus succinctement mât de moteur ; elle concerne plus précisément un carénage arrière d'un tel mât de moteur.

Dans toute la description, une nacelle, un moteur ou un mât de moteur (qu'il s'agisse d'un dispositif de l'art antérieur ou d'un dispositif selon l'invention) est observé tel qu'agencé dans un aéronef. L'axe central d'une nacelle (qui est confondu avec l'axe de révolution du moteur qu'elle contient), de même que l'axe principal d'un mât de moteur, étant parallèle à l'axe X de roulis de l'aéronef lorsque la nacelle ou le mât est monté dans l'aéronef, les termes « *direction longitudinale d'un élément de nacelle ou de mât ou de carénage* » désignent une direction parallèle à l'axe X de roulis de l'aéronef ; les termes « *direction transversale d'un élément de nacelle ou de mât ou de carénage* » désignent une direction parallèle à l'axe Y de tangage de l'aéronef (qui correspond à l'axe de la voilure de l'aéronef) ; une dimension longitudinale d'un élément de nacelle ou de mât ou de carénage est une dimension de cet élément selon l'axe X ; une dimension transversale d'un élément de nacelle ou de mat ou de carénage est une dimension de cet élément selon l'axe Y ; une dimension radiale d'un élément de nacelle est une dimension de cet élément selon une direction radiale du moteur qu'elle contient (c'est-à-dire selon une direction orthogonale à l'axe X). L'axe Z désigne l'axe orthogonal aux axes X et Y, qui correspond à la direction de la gravité lorsque l'aéronef est posé sur un sol plat.

Un mât de moteur permet de suspendre un moteur au-dessous de la voilure de l'aéronef, de monter un moteur au-dessus de cette même voilure, ou encore de rapporter ce moteur en partie arrière du fuselage de l'aéronef. L'invention peut être utilisée sur tout type d'aéronef équipé de turboréacteurs ou de turbopropulseurs ou de tout autre type de moteur. Le mât de moteur est prévu pour constituer l'interface de liaison entre un moteur (turbomoteur, turboréacteur, turbopropulseur, etc.) et une partie de la cellule de l'aéronef (en particulier la voilure). Il permet de transmettre à la structure primaire de l'aéronef les efforts générés par le moteur, et autorise également le cheminement du carburant, des systèmes électriques, hydrauliques et aérauliques entre le moteur et la cellule de l'aéronef.

Afin d'assurer la transmission des efforts, le mât de moteur comporte une structure primaire rigide. Par ailleurs, un tel mât est pourvu d'une pluralité de structures secondaires assurant la ségrégation et le maintien des systèmes tout en supportant des éléments de carénage aérodynamiques, ces derniers prenant généralement la forme d'assemblages de panneaux rapportés sur ces structures secondaires. De façon connue de l'homme du métier, les structures secondaires se différencient de la structure primaire du mât par le fait qu'elles ne sont pas destinées à assurer le transfert des efforts provenant du moteur et devant être transmis à la voilure de l'aéronef.

Usuellement, le carénage d'un mât de moteur d'aéronef compte une structure aérodynamique avant, une structure aérodynamique arrière dite RSS (acronyme de l'anglais *« Rear Secondary Structure* »), une structure aérodynamique de raccordement des structures aérodynamiques avant et arrière, connu sous le nom « *karman* », et un carénage aérodynamique arrière inférieur ou supérieur, également dénommé « APF » (acronyme de l'anglais « *Aft Pylon Fairing »).*

L'APF assure une pluralité de fonctions parmi lesquelles la formation d'une continuité aérodynamique entre la sortie du moteur et le mât d'accrochage et la formation d'une barrière thermique ou anti-feu servant à protéger le mât et la voilure de la chaleur dégagée par le flux primaire du moteur.

A noter que le carénage du mât adopte une position inférieure lorsque le moteur est destiné à être placé sous l'aile, et qu'il adopte une position supérieure lorsque le moteur est destiné à être placé au-dessus de l'aile. Dans le cas d'un moteur placé en-dessous de la voilure, l'APF est un carénage aérodynamique arrière inférieur ; dans le cas d'un moteur placé au-dessus de la voilure, l'APF est un carénage aérodynamique arrière supérieur.

Un exemple de carénage connu de l'art antérieur est divulgué dans le document EP 2 644 505. L'APF de ce carénage comprend une structure de caisson formée de deux panneaux latéraux assemblés entre eux par des nervures intérieures transversales de rigidification espacées les unes des autres selon la direction longitudinale, ainsi qu'un plancher de protection thermique ci-après dénommé bouclier thermique.

En raison de leur implantation, les panneaux latéraux de la structure de caisson de l'APF sont léchés extérieurement par un flux d'air froid, tel que le flux secondaire du moteur lorsque ce dernier est un turboréacteur à double flux. A l'inverse, le bouclier thermique présente quant à lui une face externe (inférieure ou supérieure selon l'emplacement du moteur vis-à-vis de la voilure) qui est léchée par un flux chaud de gaz de combustion (ou gaz d'échappement) du moteur, atteignant des températures de l'ordre de 550°C. Le bouclier thermique de l'APF vise à protéger la structure primaire du mât de moteur et les systèmes qui y sont logés de la température élevée des gaz d'échappement.

Les boucliers thermiques prévus dans les carénages aérodynamiques arrières inférieurs (APF) connus présentent tous une structure monolithique. Ils sont formées d'une plaque d'un matériau métallique tel que le titane ou un acier base nickel-chrome (par exemple un inconel^{®}), choisi non seulement pour sa résistance thermique mais aussi pour sa rigidité.

Avec l'arrivée d'une nouvelle génération de moteur UHBR (acronyme de l'anglais « *Ultra High Bypass Ratio* »), la température des gaz d'échappement augmente pour atteindre des températures comprises entre 600°C et 800°C. Face à cette augmentation de la température des gaz d'échappement, les plaques métalliques utilisées pour former le bouclier thermique de l'APF remplissent leur rôle de pare-feu mais il serait souhaitable de limiter la chaleur que le bouclier thermique transmet malgré tout, afin d'abaisser les températures auxquelles sont exposés le mât, les systèmes et la voilure au voisinage de la sortie du moteur.

Il pourrait être envisagé à cette fin de prévoir un bouclier formé d'une plaque en un matériau composite à matrice céramique (matériau « CMC »), mais
les propriétés mécaniques de ces matériaux s'avèrent inadaptées, avec un module d'Young trop faible.

En outre, les moteurs et les nacelles de nouvelle génération sont plus courts selon la direction longitudinale et plus grands selon les directions radiales, ce qui a pour conséquence un raccourcissement de la dimension longitudinale traitée acoustiquement. Les nuisances sonores de ces moteurs ne sont pas suffisamment atténuées par les nacelles de structure connue.

Le document FR3059300 divulgue un carénage arrière de mât moteur formant bouclier thermique comprenant une peau interne structurante, une peau externe munie de perforations et des moyens d'absorption acoustique pris en sandwich entre les deux.

L'invention vise à fournir un nouveau carénage arrière pour mât de moteur d'aéronef offrant une meilleure isolation thermique et participant à l'atténuation des nuisances sonores du moteur.

Pour ce faire, l'invention propose un carénage arrière de mât de moteur, dit APF, comprenant d'une part une ossature incluant des panneaux latéraux et des nervures de renfort transversales, et d'autre part un bouclier thermique relié à l'ossature, caractérisé en ce que le bouclier thermique présente une structure multicouche comprenant une âme isolante configurée à la fois pour constituer une barrière thermique et pour amortir des ondes acoustiques, une peau externe et une peau interne, la peau externe étant configurée pour guider le flux aérodynamique et participer à l'amortissement acoustique , la peau interne étant configurée pour assurer la tenue mécanique du bouclier thermique.

La provision d'une structure multicouche pour former le bouclier thermique a deux avantages principaux.

Elle permet d'une part de compenser le fait que la longueur de la nacelle, et donc de la surface de nacelle traitée acoustiquement, est réduite pour les moteurs de nouvelle génération, en conférant au bouclier thermique une fonction supplémentaire d'atténuation acoustique. Alors que tous les développements connus visent essentiellement à améliorer les performances acoustiques des panneaux de nacelle, l'invention propose de faire participer le carénage arrière du mât de moteur à l'atténuation des nuisances sonores du moteur.

La provision d'une structure multicouche pour former le bouclier thermique permet d'autre part d'améliorer l'isolation thermique conférée par le bouclier de l'APF puisqu'il devient possible d'utiliser, dans l'âme isolante du bouclier, des matériaux ayant une meilleure résistance thermique (que les plaques métalliques monolithiques formant les boucliers des APF antérieurs) mais une faible rigidité mécanique, la tenue mécanique étant essentiellement assurée par la peau interne de la structure multicouche du bouclier.

Selon une caractéristique possible d'un APF selon l'invention, la peau externe est une peau résistive perforée. Ainsi par exemple, la peau externe peut être pourvue, sur au moins une partie de sa surface, de trous d'absorption sonore ayant des diamètres compris entre 0,1 mm et 2,5 mm.

Selon une caractéristique possible d'un APF selon l'invention, l'âme isolante de la structure multicouche du bouclier thermique contient au moins une épaisseur à structure alvéolaire.

Selon une caractéristique possible d'un APF selon l'invention, la peau externe du bouclier thermique est perforée de trous d'absorption sonore, en particulier si l'âme contient une épaisseur cellulaire à cellules ouvertes (par exemple un nid d'abeilles).

Selon une caractéristique possible d'un APF selon l'invention, l'âme isolante de la structure multicouche du bouclier thermique contient au moins une épaisseur en un matériau choisi parmi des matériaux poreux isolants dont les mousses isolantes thermiquement, y compris des mousses métalliques, des structures alvéolaires dont les nids d'abeilles, des matériaux composites à matrice céramique, organique ou métallique, dont les Carbure de silicium, Carbone et oxydes d'aluminium.

Selon une caractéristique possible d'un APF selon l'invention, l'âme isolante de la structure multicouche du bouclier thermique contient plusieurs épaisseurs superposées (selon la direction de l'épaisseur du bouclier, c'est-à-dire selon les directions radiales, ou sensiblement selon la direction Z) faites dans des matériaux de natures différentes et/ou de structures différentes et/ou de compositions différentes et/ou de densités différentes.

Selon une caractéristique possible d'un APF selon l'invention, l'âme isolante de la structure multicouche du bouclier thermique contient plusieurs blocs de matériaux différents qui se succèdent selon une direction orbitale autour de l'axe central du moteur. Ainsi par exemple, l'âme isolante du bouclier thermique peut comporter un premier bloc central en un premier matériau, par exemple une structure alvéolaire telle qu'un nid d'abeilles, et deux blocs latéraux de part et d'autre de ce bloc central, les blocs latéraux étant en un deuxième matériau apte à augmenter la rigidité du bouclier thermique.

Selon une caractéristique possible d'un APF selon l'invention, la peau interne du bouclier thermique est une plaque monolithique faite dans un matériau choisi parmi des métaux ou des alliages de métaux, dont le titane et les aciers (alliages) base nickel-chrome connus sous la dénomination inconel^{®}, des matériaux composites dont les matériaux à base de fibre de carbone, des matériaux céramiques dont les carbure de silicium, carbone et oxydes d'aluminium.

Selon l'invention, la peau interne et la peau externe du bouclier se prolongent latéralement au-delà de l'âme isolante et se rejoignent le long des bords longitudinaux du bouclier pour enfermer l'âme isolante en formant deux bordures longitudinales (rigides).

Plusieurs solutions sont envisageables pour relier le bouclier thermique à l'ossature de l'APF.

Selon une première solution, la peau interne du bouclier est pourvue, de chaque côté du bouclier, d'une bride latérale de fixation qui s'étend parallèlement au panneau latéral adjacent ; chaque bride de fixation est alors fixée au panneau latéral par des vis ou rivets ou par collage, cocuissons ou soudure. Il peut être prévu que la bride de fixation s'étende entièrement sous les nervures de l'ossature ou qu'elle s'insère entre le panneau latéral adjacent et une portion inférieure des nervures.

Selon une deuxième solution, la peau interne du bouclier thermique est fixée aux nervures, par exemple à une face inférieure ou à une face transversale des nervures.

L'invention s'étend à un mât de moteur, un ensemble propulsif et un aéronef équipés d'un carénage arrière de mât de moteur selon l'invention.

L'invention s'étend aussi à un carénage arrière de mât de moteur caractérisé en combinaison par tout ou partie des caractéristiques mentionnées ci-avant et ci-après. Autrement dit, toutes les combinaisons possibles à partir des caractéristiques décrites dans la présente demande de brevet sont conformes à l'invention dès lors qu'il n'y a pas d'incompatibilité entre les caractéristiques combinées.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] La figure 1 est une vue en perspective d'un aéronef équipé d'un carénage arrière de mât de moteur selon l'invention.
[Fig. 2] La figure 2 est une vue schématique de profil d'un mât de moteur et de son carénage ayant un APF selon l'invention.
[Fig. 3] La figure 3 est une vue schématique en perspective d'un APF de l'art antérieur.
[Fig. 4] La figure 4 est une vue schématique en perspective de la structure (secondaire) de l'APF antérieur de la figure 3, les panneaux latéraux étant omis permettre d'observer les nervures de renfort transversales de cette structure.
[Fig. 5] La figure 5 est une vue schématique en perspective du bouclier thermique de l'APF antérieur des figures 3 et 4.
[Fig. 6] la figure 6 est une vue en coupe dans un plan transversal (plan orthogonal à la direction longitudinale de l'APF et donc à l'axe X de roulis de l'aéronef) d'un APF selon l'invention, qui illustre un premier mode de réalisation de la fixation du bouclier thermique à l'ossature de l'APF.
[Fig. 7] la figure 7 est une vue en coupe dans un plan transversal d'un APF selon l'invention, qui illustre un deuxième mode de réalisation de la fixation du bouclier thermique à l'ossature de l'APF.
[Fig. 8] la figure 8 est une vue en coupe dans un plan transversal d'un APF selon l'invention, qui illustre un troisième mode de réalisation de la fixation du bouclier thermique à l'ossature de l'APF.
[Fig. 9] la figure 9 est une vue en coupe dans un plan transversal d'un APF selon l'invention, qui illustre un premier mode de réalisation de l'âme isolante du bouclier thermique de l'APF.
[Fig. 10] la figure 10 est une vue en coupe dans un plan transversal d'un APF selon l'invention, qui illustre un deuxième mode de réalisation de l'âme isolante du bouclier thermique de l'APF.
[Fig. 11] la figure 11 est une vue en coupe dans un plan transversal d'un APF selon l'invention, qui illustre un troisième mode de réalisation de l'âme isolante du bouclier thermique de l'APF.
[Fig. 12] la figure 12 est une vue en coupe dans un plan transversal d'un APF selon l'invention, qui illustre un quatrième mode de réalisation de l'âme isolante du bouclier thermique de l'APF.

Les éléments identiques représentés sur les figures précitées sont identifiés par des références numériques identiques.

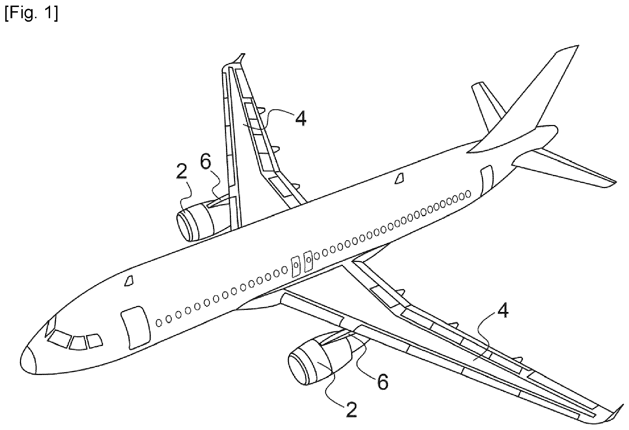

La figure 1 représente un aéronef. L'aéronef comprend deux ensembles propulsifs (incluant chacun un moteur, non visible, et une nacelle 2) agencés sous les ailes 4 de l'aéronef, et reliés auxdites ailes à l'aide de mâts de moteur 6.

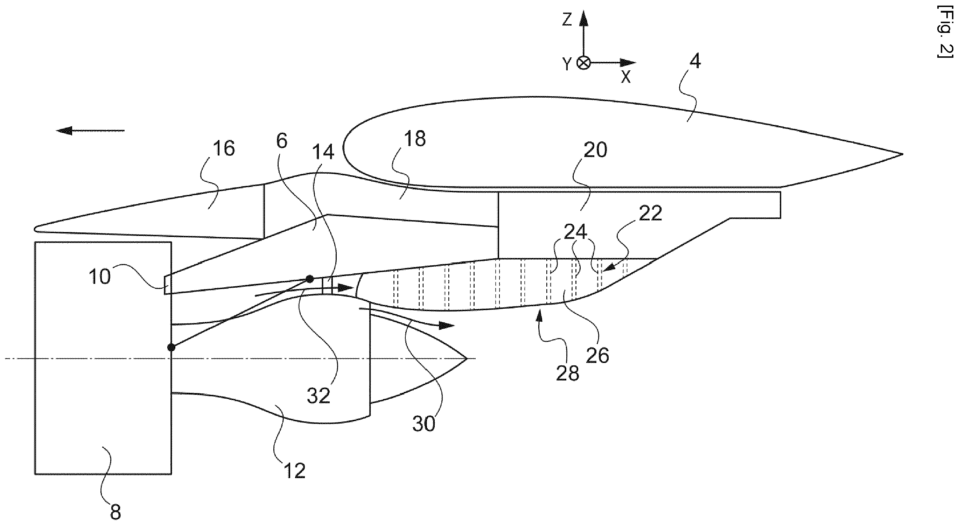

On aperçoit plus en détails à la figure 2 la liaison entre un moteur et une aile 4 (en traits pointillés). Cette liaison comprend un mât de moteur 6 ayant une structure primaire à laquelle le carter de soufflante 8 du moteur est fixé par des attaches antérieures 10 et à laquelle le carter central de turbine 12 est fixé par des attaches centrales 14. La liaison entre le moteur et l'aile comprend de plus un carénage incluant une structure aérodynamique avant 16, une structure aérodynamique arrière ou RSS 20, une structure aérodynamique intermédiaire ou karman 18, et un carénage arrière inférieur ou APF 22.

L'APF 22 comprend une ossature et un bouclier thermique 28. L'ossature de l'APF comprend des nervures de renfort 24, qui s'étendent essentiellement dans des plans transversaux (plans YZ, orthogonaux à l'axe de roulis X) et sont espacées selon la direction longitudinale, ainsi que des panneaux latéraux 26 qui forment une structure aérodynamique assurant une continuité entre le moteur et le RSS 20 puis l'aile 4.

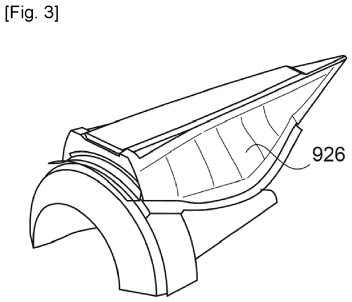

Les panneaux latéraux 26 peuvent être formés de plaques planes, dont une ou plusieurs plaques planes qui s'étendent approximativement selon la direction longitudinale sur une portion antérieure de l'APF, puis une ou plusieurs plaques planes qui s'étendent selon une direction formant un angle avec la direction longitudinale sur une portion postérieure de l'APF de sorte que les deux panneaux latéraux se rapprochent l'un de l'autre vers l'arrière de l'APF. En variante, les panneaux latéraux sont incurvés sur toute leur longueur, à l'instar des panneaux 926 illustrés à la figure 3.

Le bouclier thermique 28 de l'APF forme un pare-feu entre le moteur et le mât de moteur 6 puis l'aile 4. Il est léché par les gaz d'échappement (flux primaire) 30 chauds qui sortent du moteur, tandis que les panneaux latéraux 26 de l'APF sont léchés par un flux secondaire 32 plus froid.

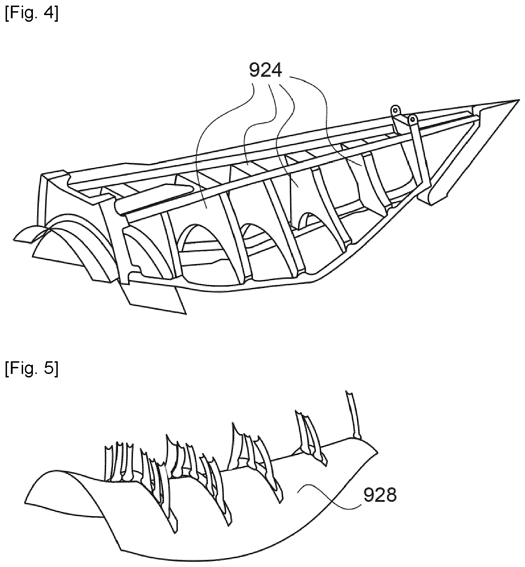

Les figures 3 à 6 montrent un APF de l'art antérieur. On peut observer un panneau latéral 926 courbe à la figure 3, tandis que la figure 4 montre les parties de l'ossature de l'APF qui sont normalement cachées par les panneaux latéraux, en particulier les nervures transversales de renfort 924.

Un APF selon l'invention peut avoir une ossature identique ou similaire à celle des APF connus, en particulier des nervures 924 telles celles illustrées sur les figures 3 et 4. Les panneaux d'un APF selon l'invention peuvent être des panneaux composés de plaques planes ou des panneaux à face courbe tel le panneau 926 illustré à la figure 3.

En revanche, les APF connus ont tous un bouclier thermique 928 monolithique en métal, tel celui illustré à la figure 5, alors qu'un APF selon l'invention possède un bouclier thermique 28 à structure multicouche.

Ce bouclier thermique multicouche peut être plan ou incurvé, à courbure simple ou double.

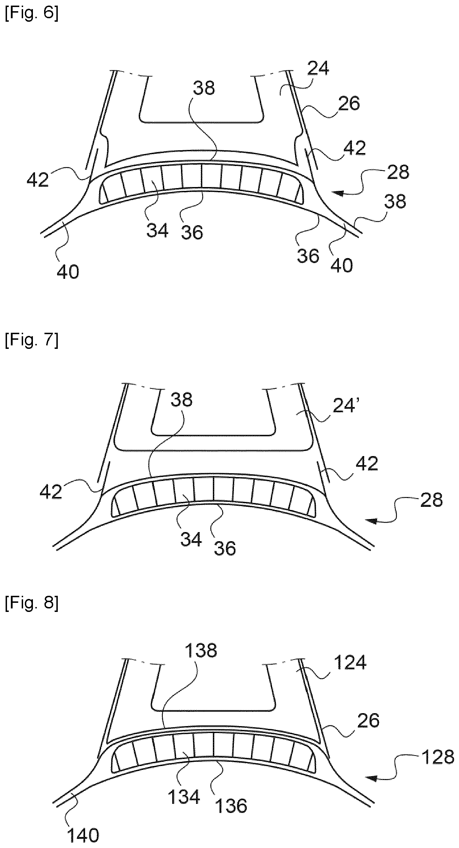

Les figures 6 à 12 montrent plus en détails des boucliers thermiques 28, 128, 228, 328, 428 et 528 à structure multicouche selon l'invention et la fixation de ceux-ci à l'ossature de l'APF.

Selon l'invention, le bouclier thermique 28 de l'APF (voir fig. 6) comprend une âme isolante 34, une peau externe 36 et une peau interne 38. La peau externe 36 et la peau interne 38 se prolongent latéralement au-delà de l'âme isolante 34, où elles se rejoignent et sont fixées l'une à l'autre pour former deux bordures longitudinales 40 qui enferment l'âme isolante 34. Ces bordures (appelées « blades » en anglais) intègrent une fonction thermo-aérodynamique ayant pour objectif de limiter la remontée d'air chaud venant du flux primaire et d'améliorer la transition des écoulements d'airs entre l'air chaud du flux primaire et l'air frais du flux secondaire.

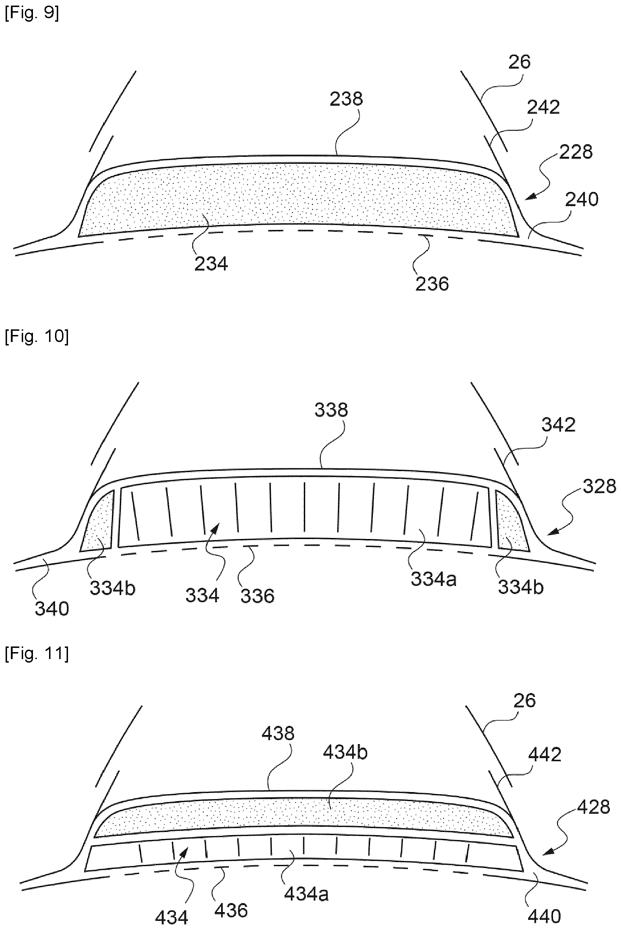

L'âme 34 des boucliers thermiques illustrés sur les figures 6 à 8 est constituée d'une structure alvéolaire en nid d'abeilles ; une autre structure alvéolaire, de section quelconque en forme et en surface, est bien sûr possible. Les figures 9 à 12 montrent d'autres exemples de réalisation de l'âme d'un bouclier thermique à structure multicouche selon l'invention.

L'âme 234 du bouclier de la figure 9 est réalisée à base d'un matériau poreux isolant, tel qu'une mousse, choisi à la fois pour ses propriétés thermiques et acoustiques, mais aussi mécaniques. La taille des porosités ainsi que le taux de porosité peuvent prendre diverses valeurs et en particulier être adaptés en fonction des besoins acoustiques, thermiques et structuraux. En particulier, la rigidité souhaitée pour le bouclier peut déterminer la densité de mousse choisie, selon la rigidité de la peau interne 238 du bouclier. La taille et le taux des porosités à l'intérieur du matériau peuvent varier mais seront de préférence réparties de manière homogène. Pour le reste de l'exposé de l'invention, le terme mousse désignera de façon générique tout matériau poreux ainsi adapté à l'invention.

L'âme isolante 334 du bouclier de la figure 10 comprend un bloc central cellulaire 334a du type structure alvéolaire (ex nid d'abeilles) dont la fonction est essentiellement d'amortir les ondes sonores. Pour le reste de l'exposé de l'invention, l'expression « nid d'abeilles » désignera de façon générique tout matériau alvéolaire acoustique adapté à l'invention.

Afin que cette fonction puisse être efficacement remplie (dans le cas d'une âme en nid d'abeilles par exemple), la peau externe 336 du bouclier est perforée de trous d'absorption sonore en regard dudit bloc 334a pour permettre aux ondes sonores de pénétrer dans le nid d'abeilles. Les trous d'absorption sonore peuvent varier de 0,1 mm à 2,5 mm de diamètre. Cependant, les trous seront les plus petits possible afin de limiter leur impact sur la traînée. Avantageusement, ces trous ont un diamètre inférieur à 0,8 mm, de préférence inférieur à 0,6 mm, voire inférieur à 0,3 mm, par exemple de l'ordre de 0,1 mm. Les trous peuvent avoir une section de forme quelconque, par exemple circulaire, oblongue, carrée, polygonale, en forme de goutte d'eau, etc. Le « diamètre » des trous désigne alors la plus grande dimension transversale desdits trous. Le Taux de Surface Ouverte (rapport entre la surface totale des trous sur la surface totale de la peau en regard du nid d'abeilles) dépend des dimensions transversales des cellules du nid d'abeilles, de la hauteur du nid d'abeilles, de la fréquence des ondes à amortir, etc. Le TSO pourra être compris entre 3% et 25 % en fonction du besoin d'atténuation acoustique et de la tenue structurale demandée.

L'âme isolante 334 comprend de plus deux blocs latéraux 334b en mousse qui participent à l'isolation thermique (mais pas ou peu à l'isolation acoustique) conférée par le bouclier et qui ont aussi et surtout pour fonction de rigidifier le bouclier et d'en renforcer la résistance mécanique.

L'âme isolante 434 du bouclier thermique 428 de la figure 11 comprend une première épaisseur isolante 434a alvéolaire du type structure en nid d'abeilles qui forme, avec la peau externe 436, des résonateurs quart d'onde pour l'amortissement des ondes sonores produites par le moteur, et une seconde épaisseur isolante 434b en mousse qui contribue à l'isolation thermique (l'âme isolante formant un matelas isolant thermique entre le moteur et le mât de moteur) et qui de plus rigidifie le bouclier. La mousse du bloc 434b peut présenter des propriétés acoustiques ou en être dépourvue. Contrairement aux blocs 334a et 334b décrits précédemment, les épaisseurs isolantes 434a et 434b s'étendent sur toute la largeur (ou circonférence) du bouclier, à l'exception de deux bordures longitudinales 440 (qui enferment l'âme isolante) ; lesdites épaisseurs isolantes sont superposées selon une direction radiale, c'est-à-dire selon la direction de l'épaisseur du bouclier.

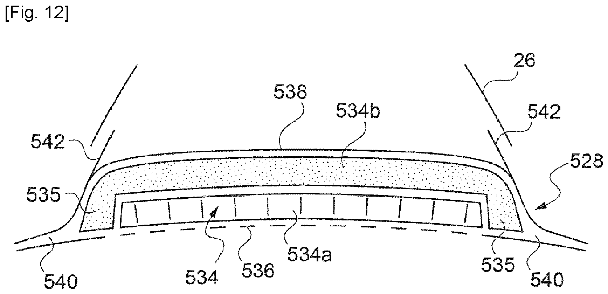

La figure 12 montre un autre exemple de bouclier thermique 534 selon l'invention mêlant deux blocs de matériaux cellulaires différents dont un bloc 534a en nid d'abeilles et un bloc 534b en mousse. La fonction acoustique est essentiellement assurée par le bloc 534a qui est associé à une peau externe 536 résistive perforée. Toutefois, la mousse utilisée pour le bloc 534b peut également présenter des propriétés acoustiques et contribuer à l'atténuation des nuisances sonores du moteur, bien que ses fonctions soient principalement d'améliorer la résistance mécanique du bouclier tout en contribuant à l'isolation thermique. Les deux blocs 534a et 534b forment deux épaisseurs isolantes superposées selon des directions radiales sur une grande majorité de la largeur du bouclier. De chaque côté du bouclier, le bloc de mousse 534b présente de plus un rebord 535 qui forme une bande latérale de renfort entre le bloc en nid d'abeilles 534a et une bordure longitudinale 540 du bouclier. Pour une meilleure rigidité du bouclier, la peau externe 536 n'est perforée qu'en regard du bloc en nid d'abeilles 534a et est pleine en regard des bandes latérales de renfort 535 (notamment si la mousse du bloc 534b n'est pas une « mousse acoustique »).

Les âmes isolantes illustrées ne sont que des exemples non limitatifs. Toutes les combinaisons, superpositions et assemblages de blocs de matériaux isolants différents sont possibles selon les besoins mécaniques et selon les besoins thermiques et acoustiques, en fonction notamment de la géométrie et des dimensions du bouclier ainsi que de la surface acoustique nécessaire pour pallier un traitement acoustique insuffisant de la nacelle du moteur. Il est aussi possible de prévoir une âme isolante dont la composition ou les propriétés varient selon la direction longitudinale ; par exemple, l'âme isolante contient un bloc de mousse dont la densité varie selon la direction longitudinale ou elle contient plusieurs blocs de matériaux différents qui se succèdent selon la direction longitudinale.

A l'instar du bouclier 28 de la figure 6, les boucliers 128, 228, 328, 428 et 528 comprennent des bordures longitudinales 140, 240, 340, 440, 540.

Le bouclier 28 des figures 6 et 7 comprend de plus deux brides latérales de fixation 42 qui s'étendent chacune parallèlement au panneau latéral 26 adjacent à partir de la peau interne 38 du bouclier. Ces brides latérales servent à l'assemblage du bouclier et de l'ossature de l'APF. Elles peuvent en effet être fixées sur les panneaux latéraux 26, contre lesquelles elles sont plaquées, par brasage, cocuissons, soudure ou collage ou encore à l'aide de rivets ou vis. De façon similaire, les boucliers 228, 328, 428, 528 des figures 9 à 12 sont dotés de brides latérales de fixation 242, 342, 442, 542.

Dans l'exemple de la figure 7, les brides latérales de fixation 42 s'étendent entièrement sous les nervures 24' de l'ossature. A l'inverse, dans l'exemple de la figure 6, chaque nervure 24 présente, de chaque côté de l'APF, une face latérale qui longe le panneau latéral 26 adjacent. Un épaulement est ménagé dans la face latérale de la nervure de sorte qu'un espace est créé entre la nervure 24 et le panneau latéral 26 sur une portion inférieure de la nervure. Une portion supérieure de la bride de fixation 42 du bouclier vient s'insérer dans cet espace entre la nervure et le panneau latéral.

La figure 8 illustre une variante dans laquelle le bouclier 128 est dépourvu de brides latérales de fixation. Dans cette variante, la peau interne 138 du bouclier est plaquée contre une face inférieure des nervures 124 de l'ossature et la peau interne 138 est fixée sur ladite face inférieure des nervures 124, par exemple par collage ou soudure (les panneaux latéraux 26 de l'ossature sont dans ce cas fixés aux nervures 124 après fixation du bouclier 128 auxdites nervures) ; en variante, la peau interne 138 est dotée de pattes de fixation (telles celles que l'on peut apercevoir sur le bouclier antérieur monolithique de la figure 5 et chaque patte est fixée sur une face transversale d'une nervure 124 à l'aide de vis ou par collage ou soudure.

Bien entendu, d'autres modes de fixation sont possibles. On peut par exemple envisager d'utiliser les bordures longitudinales 40, 140..., en fixant ces dernières sur les panneaux latéraux 26 de l'ossature de l'APF, l'âme du bouclier étant alors dimensionnée de façon à s'insérer intégralement dans l'ossature entre les deux panneaux latéraux ; la fixation peut alors être obtenue à l'aide de vis ou rivets, soit par l'intermédiaire d'éclisses, soit directement (dans ce cas, un rebord s'étendant parallèlement à la bordure adjacente est prévu dans chacun des panneaux latéraux ; en variante, le rebord est formé dans la bordure du bouclier et s'étend parallèlement au panneau latéral adjacent).

L'invention s'étend à toute variante accessible à l'homme du métier c'est-à-dire à toute variante entrant dans le cadre délimité par les revendications annexées.

## Revendications

1. Carénage arrière de mât de moteur, dit APF, comprenant d'une part une ossature incluant des panneaux latéraux (26) et des nervures de renfort transversales (24, 24', 124), et d'autre part un bouclier thermique (28, 128, 228, 328, 428, 528) relié à l'ossature, le bouclier thermique (28 128, 228, 328, 428, 528) présentant une structure multicouche comprenant une âme isolante (34, 134, 234, 334, 434, 534) configurée à la fois pour constituer une barrière thermique et pour amortir des ondes acoustiques, une peau externe (36, 136, 236, 336, 436, 536) et une peau interne (38, 138, 238, 338, 438, 538), la peau externe étant configurée pour guider un flux aérodynamique et participer à l'amortissement acoustique, la peau interne étant configurée pour assurer la tenue mécanique du bouclier thermique, **caractérisé en ce que** la peau interne (38, 138, 238, 338, 438 538) et la peau externe (36, 136, 236, 336, 436, 536) du bouclier thermique se pronlongent latéralement au-delà de l'âme isolante (34, 134, 234, 334, 434, 534) et se rejoignent le long de bords longitudinaux du bouclier pour enfermer l'âme isolante en formant deux bordures longitudinales (40, 140, 240, 340, 440, 540)..

2. Carénage arrière de mât de moteur selon la revendication 1, **caractérisé en ce que** la peau externe (236, 336, 436, 536) est une peau résistive perforée.

3. Carénage arrière de mât de moteur selon la revendication 2, **caractérisé en ce que** la peau externe (236, 336, 436, 536) est pourvue, sur au moins une partie de sa surface, de trous d'absorption sonore ayant des diamètres compris entre 0,1 mm et 2,5 mm.

4. Carénage arrière de mât de moteur selon l'une des revendications 1 à 3, **caractérisé en ce que** l'âme isolante de la structure multicouche du bouclier thermique contient au moins une épaisseur en un matériau choisi parmi des matériaux poreux isolants dont les mousses isolantes thermiquement (234, 334b, 434b, 534b) y compris des mousses métalliques, des structures alvéolaires dont les nids d'abeilles (34, 134, 334a, 434a, 534a), des matériaux composites à matrice céramique, organique ou métallique dont Carbure de silicium, Carbone et oxydes d'aluminium.

5. Carénage arrière de mât de moteur selon l'une des revendications 1 à 4, **caractérisé en ce que** l'âme isolante de la structure multicouche du bouclier thermique contient plusieurs épaisseurs superposées (434a, 434b ; 534a, 534b) faites dans des matériaux de natures différentes et/ou de structures différentes et/ou de compositions différentes et/ou de densités différentes.

6. Carénage arrière de mât de moteur selon l'une des revendications 1 à 5, **caractérisé en ce que** l'âme isolante de la structure multicouche du bouclier thermique contient plusieurs blocs (334a, 334b) de matériaux différents qui se succèdent selon une direction orbitale autour de l'axe central du moteur.

7. Carénage arrière de mât de moteur selon la revendication 6, **caractérisé en ce que** l'âme isolante de la structure multicouche du bouclier thermique contient au moins un bloc central à structure alvéolaire (334a) et deux blocs latéraux (334b) de part et d'autre du bloc central, les blocs latéraux étant en un deuxième matériau apte à augmenter la rigidité du bouclier thermique.

8. Carénage arrière de mât de moteur selon l'une des revendications 1 à 7, **caractérisé en ce que** la peau interne (38, 138, 238, 338, 438, 538) du bouclier thermique est une plaque monolithique faite dans un matériau choisi parmi des métaux ou des alliages de métaux, dont le titane et les aciers à base nickel-chrome connus sous la dénomination inconel^{®}, des matériaux composites dont les matériaux à base de fibre de carbone, des matériaux céramiques dont les carbure de silicium, carbone et oxydes d'aluminium.

9. Carénage arrière de mât de moteur selon l'une des revendications 1 à 8, **caractérisé en ce que** la peau interne (38, 238, 338, 438, 538) du bouclier thermique est pourvue, de chaque côté dudit bouclier thermique, d'une bride latérale de fixation (42, 242, 342, 442, 542) qui s'étend parallèlement au panneau latéral (26) du côté en question, et **en ce que** chaque bride latérale de fixation est fixée au panneau latéral qui lui est adjacent.

10. Carénage arrière de mât de moteur selon l'une des revendications 1 à 8, **caractérisé en ce que** la peau interne (138) du bouclier thermique est fixée aux nervures de renfort transversales (124) de l'ossature.

11. Mât de moteur d'aéronef **caractérisé en ce qu'**il comprend un carénage arrière de mât de moteur selon l'une des revendications 1 à 10.

12. Aéronef, **caractérisé en ce qu'**il comprend un carénage arrière de mât de moteur selon l'une des revendications 1 à 10.

## Patentansprüche

1. Hintere Verkleidung einer Triebwerksaufhängung, die als Aft Pylon Fairing (APF) bezeichnet wird, umfassend einerseits ein Gerüst, das Seitenplatten (26) und querverlaufende Verstärkungsrippen (24, 24', 124) beinhaltet, und andererseits einen mit dem Gerüst verbundenen Hitzeschild (28, 128, 228, 328, 428, 528), wobei der Hitzeschild (28, 128, 228, 328, 428, 528) eine mehrschichtige Struktur aufweist, die einen isolierenden Kern (34, 134, 234, 334, 434, 534) umfasst, der so konfiguriert ist, dass er sowohl eine thermische Sperre bildet als auch Schallwellen dämpft, eine Außenhaut (36, 136, 236, 336, 436, 536) und eine Innenhaut (38, 138, 238, 338, 438, 538), wobei die Außenhaut so konfiguriert ist, dass sie einen aerodynamischen Strom führt und zur Schalldämpfung beiträgt, wobei die Innenhaut so konfiguriert ist, dass sie den mechanischen Halt des Hitzeschilds gewährleistet,
**dadurch gekennzeichnet, dass** sich die Innenhaut (38, 138, 238, 338, 438, 538) und die Außenhaut (36, 136, 236, 336, 436, 536) des Hitzeschilds über den isolierenden Kern (34, 134, 234, 334, 434, 534) hinaus erstrecken und entlang der Längsränder des Schilds zusammenlaufen, um den isolierenden Kern einzuschließen, indem sie zwei Längskanten (40, 140, 240, 340, 440, 540) bilden.

2. Hintere Triebwerksaufhängungsverkleidung nach Anspruch 1, **dadurch gekennzeichnet, dass** die Außenhaut (236, 336, 436, 536) eine perforierte Widerstandshaut ist.

3. Hintere Triebwerksaufhängungsverkleidung nach Anspruch 2, **dadurch gekennzeichnet, dass** die Außenhaut (236, 336, 436, 536) über zumindest einen Teil ihrer Oberfläche mit schalldämpfenden Löchern mit Durchmessern zwischen 0,1 mm und 2,5 mm versehen ist.

4. Hintere Triebwerksaufhängungsverkleidung nach einem der Ansprüche 1 bis 3, **dadurch gekennzeichnet, dass** der isolierende Kern der mehrschichtigen Struktur des Hitzeschilds zumindest eine Lage aus einem Material enthält, das ausgewählt ist aus porösen isolierenden Materialien, darunter wärmeisolierende Schäume (234, 334b, 434b, 534b), einschließlich Metallschäume, alveolären Strukturen, darunter Bienenwaben (34, 134, 334a, 434a, 534a), Verbundmaterialien mit keramischer, organischer oder metallischer Matrix, darunter Siliziumcarbid, Kohlenstoff und Aluminiumoxide.

5. Hintere Triebwerksaufhängungsverkleidung nach einem der Ansprüche 1 bis 4, **dadurch gekennzeichnet, dass** der isolierende Kern der mehrschichtigen Struktur des Hitzeschilds mehrere übereinanderliegende Lagen (434a, 434b; 534a, 534b) enthält, die aus Materialien unterschiedlicher Arten und/oder unterschiedlicher Strukturen und/oder unterschiedlicher Zusammensetzungen und/oder unterschiedlicher Dichten gefertigt sind.

6. Hintere Triebwerksaufhängungsverkleidung nach einem der Ansprüche 1 bis 5, **dadurch gekennzeichnet, dass** der isolierende Kern der mehrschichtigen Struktur des Hitzeschilds mehrere Blöcke (334a, 334b) aus unterschiedlichen Materialien enthält, die in einer Orbitalrichtung um die Mittelachse des Motors aufeinanderfolgen.

7. Hintere Triebwerksaufhängungsverkleidung nach Anspruch 6, **dadurch gekennzeichnet, dass** der isolierende Kern der mehrschichtigen Struktur des Hitzeschilds zumindest einen mittleren Block von alveolarer Struktur (334a) und zwei seitliche Blöcke (334b) auf beiden Seiten des mittleren Blocks enthält, wobei die seitlichen Blöcke aus einem zweiten Material gebildet sind, das dazu geeignet ist, die Steifigkeit des Hitzeschilds zu erhöhen.

8. Hintere Triebwerksaufhängungsverkleidung nach einem der Ansprüche 1 bis 7, **dadurch gekennzeichnet, dass** die Innenhaut (38, 138, 238, 338, 438, 538) des Hitzeschild eine monolithische Platte ist, die aus einem Material gefertigt ist, das aus Metallen oder Metalllegierungen, einschließlich Titan und Stählen auf Nickel-Chrom-Basis, die unter der Bezeichnung Inconel^{®} bekannt sind, Verbundmaterialien, darunter Materialien auf Kohlenstofffaserbasis, keramischen Materialien, darunter Siliziumcarbid, Kohlenstoff und Aluminiumoxiden, ausgewählt ist.

9. Hintere Triebwerksaufhängungsverkleidung nach einem der Ansprüche 1 bis 8, **dadurch gekennzeichnet, dass** die Innenhaut (38, 238, 338, 438, 538) des Hitzeschilds auf beiden Seiten des Hitzeschilds mit einem seitlichen Befestigungsflansch (42, 242, 342, 442, 542) versehen ist, der sich parallel zur Seitenplatte (26) der betreffenden Seite erstreckt, und dass jeder seitliche Befestigungsflansch an der an ihn angrenzenden Seitenplatte befestigt ist.

10. Hintere Triebwerksaufhängungsverkleidung nach einem der Ansprüche 1 bis 8, **dadurch gekennzeichnet, dass** die Innenhaut (138) des Hitzeschilds an den querverlaufenden Verstärkungsrippen (124) des Gerüsts befestigt ist.

11. Triebwerksaufhängung eines Luftfahrzeugs, **dadurch gekennzeichnet, dass** sie eine hintere Triebwerksaufhängungsverkleidung nach einem der Ansprüche 1 bis 10 umfasst.

12. Luftfahrzeug, **dadurch gekennzeichnet, dass** es eine hintere Triebwerksaufhängungsverkleidung nach einem der Ansprüche 1 bis 10 umfasst.

## Claims

1. Aft engine pylon fairing, called APF, comprising, on the one hand, a framework including lateral panels (26) and transverse reinforcing ribs (24, 24', 124), and, on the other hand, a heat shield (28, 128, 228, 328, 428, 528) linked to the framework, the heat shield (28, 128, 228, 328, 428, 528) having a multilayer structure comprising an insulating core (34, 134, 234, 334, 434, 534) configured both to constitute a thermal barrier and to damp acoustic waves, an outer skin (36, 136, 236, 336, 436, 536) and an inner skin (38, 138, 238, 338, 438, 538), the outer skin being configured to guide an aerodynamic flow and contribute to the acoustic damping, the inner skin being configured to ensure the mechanical strength of the heat shield, **characterized in that** the inner skin (38, 138, 238, 338, 438, 538) and the outer skin (36, 136, 236, 336, 436, 536) of the heat shield are extended laterally beyond the insulating core (34, 134, 234, 334, 434, 534) and meet along longitudinal edges of the shield to enclose the insulating core by forming two longitudinal borders (40, 140, 240, 340, 440, 540).

2. Aft engine pylon fairing according to Claim 1, **characterized in that** the outer skin (236, 336, 436, 536) is a perforated resistive skin.

3. Aft engine pylon fairing according to Claim 2, **characterized in that** the outer skin (236, 336, 436, 536) is provided, on at least a part of its surface, with sound absorption holes having diameters of between 0.1 mm and 2.5 mm.

4. Aft engine pylon fairing according to one of Claims 1 to 3, **characterized in that** the insulating core of the multilayer structure of the heat shield contains at least one thickness made of a material chosen from among insulating porous materials including thermally insulating foams (234, 334b, 434b, 534b) including metal foams, cellular structures including honeycombs (34, 134, 334a, 434a, 534a), ceramic, organic or metallic matrix composite materials including silicon carbide, carbon and aluminium oxides.

5. Aft engine pylon fairing according to one of Claims 1 to 4, **characterized in that** the insulating core of the multilayer structure of the heat shield contains several superposed thicknesses (434a, 434b; 534a, 534b) made from materials of different kinds and/or of different structures and/or of different compositions and/or of different densities.

6. Aft engine pylon fairing according to one of Claims 1 to 5, **characterized in that** the insulating core of the multilayer structure of the heat shield contains several blocks (334a, 334b) of different materials which follow one another in an orbital direction about the central axis of the engine.

7. Aft engine pylon fairing according to Claim 6, **characterized in that** the insulating core of the multilayer structure of the heat shield contains at least one central block with cellular structure (334a) and two lateral blocks (334b) on either side of the central block, the lateral blocks being made of a second material capable of increasing the rigidity of the heat shield.

8. Aft engine pylon fairing according to one of Claims 1 to 7, **characterized in that** the inner skin (38, 138, 238, 338, 438, 538) of the heat shield is a monolithic plate made from a material chosen from among metals or metal alloys, including titanium and nickel-chromium-based steels known as inconel^{®}, composite materials including carbon fibre-based materials, ceramic materials including silicon carbide, carbon and aluminium oxides.

9. Aft engine pylon fairing according to one of Claims 1 to 8, **characterized in that** the inner skin (38, 238, 338, 438, 538) of the heat shield is provided, on each side of said heat shield, with a lateral fixing flange (42, 242, 342, 442, 542) which extends parallel to the lateral panel (26) on the side concerned, and **in that** each lateral fixing flange is fixed to the lateral panel which is adjacent to it.

10. Aft engine pylon fairing according to one of Claims 1 to 8, **characterized in that** the inner skin (138) of the heat shield is fixed to the transverse reinforcing ribs (124) of the framework.

11. Aircraft engine pylon, **characterized in that** it comprises an aft engine pylon fairing according to one of Claims 1 to 10.

12. Aircraft, **characterized in that** it comprises an aft engine pylon fairing according to one of Claims 1 to 10.
